# EUROPEAN PATENT APPLICATION

(11) **EP 4 772 906 A1**
(43) Date of publication of application: **08.07.2026**
(21) Application number: 25218286.0
(22) Date of filing: 25.11.2025
(51) Int. Cl.: G01S 13/58, G01S 7/35, G01S 13/931, G01S 13/42, G01S 13/34, G01S 7/02

(54) **AUTOMOTIVE RADAR USING HEREDITARY APODIZATION SPARSE ARRAY PROCESSING FOR DIRECTION OF ARRIVAL ESTIMATION**

(30) Priority: 18.12.2024 US 202418986253
(71) Applicant: NXP USA, Inc., Austin, TX 78735 (US)
(72) Inventor: Wu, Ryan Haoyun, 5656AG Eindhoven (NL); Shi, Binbin, 5656AG Eindhoven (NL); Li, Jun, 5656AG Eindhoven (NL)
(74) Representative: Colaiuda, Antonella

(57) **Abstract**

A system and method is presented for determining a plurality of MIMO virtual antenna arrays. Each virtual antenna array of the plurality of MIMO virtual antenna arrays is associated with a subset of a plurality of transmit antennas (102) and a subset of a plurality of receive antennas (104). Signals received by the plurality of receive antennas are used to determine signal spectrums (208) for each MIMO virtual antenna array of the plurality of MIMO virtual antenna arrays. Each signal spectrum includes signal magnitude values and has associated angle values, wherein main lobe (210) positions of the signal spectrums of the plurality of MIMO virtual antenna arrays are at a same angle across all signal spectrums and sidelobe (212) positions of the signal spectrums are not at the same angle across all signal spectrums. A first combined MIMO virtual antenna array signal spectrum (409) is determined by combining minimum values of the signal spectrums at each angle value. The first combined MIMO virtual antenna array signal spectrum is used to detect an object.

## Description

### FIELD

The present disclosure generally relates to signal processing in civil automotive radar systems and, more specifically, to improved approaches for multiple-input multiple-output (MIMO) virtual array signal processing.

### BACKGROUND

A radar system, such as an automotive radar system that may be used in civil automotive applications, transmits an electromagnetic signal and receives back reflections of the transmitted signal. The time delay and/or time delay variation between the transmitted and received signals can be determined and used to calculate the distance and/or the speed of objects, such as cars, trucks, motorcycles, traffic signs, roadway fixtures, and the like, causing the reflections, respectively. For example, in civil automotive applications, automotive radar systems can be used to determine the distance and/or the speed of oncoming vehicles and other obstacles.

Automotive radar systems enable the implementation of advanced driver-assistance system (ADAS) functions that are likely to enable increasingly safe driving and, eventually, fully autonomous driving platforms. Such systems use radar systems as the primary sensor for ADAS operations.

Unlike non-civil radars that typically employ physical antenna arrays for angle estimation, automotive radar systems, as a cost saving measure, typically employ multiple-input multiple-output (MIMO) signal processing to construct virtual antenna arrays using fewer physical antennas. This MIMO processing allows for the determination of, for example, and angle of arrival of an object in a vicinity of the vehicle. Despite tradeoffs that are made when employing MIMO signal processing, such as degraded signal-to-noise (SNR), increased measurement errors and biases, increased correlation in the measurements, increased cross-channel interference, increased ambiguity, and higher processing load, MIMO remains a popular design for cost-sensitive systems like civil automotive radars. It is due to these degradations that MIMO approaches are typically not used in performance-driven systems such as non-civil radars. In a MIMO radar system, several virtual antenna arrays are determined as part of the signal processing process to detect potential objects. Although the use of such virtual array can improve the radar system's resolution, conventional virtual array processing can mask the reflection signals generated by smaller objects, potential resulting in the radar system failing to detect some objects in the vicinity of the vehicle. Such masking is further intensified when the virtual array designs are sparse or non-uniform, which generally results in additional ambiguity sidelobes that further masks objects coinciding with the sidelobes.

### SUMMARY

This summary section is neither intended to be, nor should be, construed as being representative of the full extent and scope of the present disclosure. Additional benefits, features and embodiments of the present disclosure are set forth in the attached figures and in the description hereinbelow, and as described by the claims. Accordingly, it should be understood that this summary section may not contain all of the aspects and embodiments claimed herein.

Additionally, the disclosure herein is not meant to be limiting or restrictive in any manner. Moreover, the present disclosure is intended to provide an understanding to those of ordinary skill in the art of one or more representative embodiments supporting the claims. Thus, it is important that the claims be regarded as having a scope including constructions of various features of the present disclosure insofar as they do not depart from the scope of the methods and apparatuses consistent with the present disclosure (including the originally filed claims). Moreover, the present disclosure is intended to encompass and include obvious improvements and modifications of the present disclosure.

In some aspects, the techniques described herein relate to a system, including: a plurality of transmitter modules configured to transmit a plurality of transmitted radar signals using a plurality of transmit antennas; a plurality of receiver modules configured to receive reflections of the plurality of transmitted radar signals using a plurality of receive antennas; and a controller configured to: determine a plurality of MIMO virtual antenna arrays, wherein each virtual antenna array of the plurality of MIMO virtual antenna arrays is associated with a subset of the plurality of transmit antennas and a subset of the plurality of receive antennas, determine, using signals received by the plurality of receiver modules, signal spectrums for each MIMO virtual antenna array of the plurality of MIMO virtual antenna arrays, wherein each signal spectrum includes signal magnitude values and associated angles, wherein main lobes of each signal spectrum are at a same angle across all signal spectrums and sidelobe positions of the signal spectrums are not at the same angle across all signal spectrums, construct a first combined MIMO virtual antenna array signal spectrum by combining minimum values of the signal spectrums at each angle value, and process the first combined MIMO virtual antenna array signal spectrum to detect an object.

In some aspects, the techniques described herein relate to a system, including: a plurality of transmitter modules configured to transmit a plurality of transmitted radar signals using a plurality of transmit antennas; a plurality of receiver modules configured to receive reflections of the plurality of transmitted radar signals using a plurality of receive antennas; and a controller configured to: determine a plurality of MIMO virtual antenna arrays, wherein each virtual antenna array of the plurality of MIMO virtual antenna arrays is associated with a subset of the plurality of transmit antennas and a subset of the plurality of receive antennas, determine, using signals received by the plurality of receiver modules, signal spectrums for each MIMO virtual antenna array of the plurality of MIMO virtual antenna arrays, wherein each signal spectrum includes signal magnitude values and has associated angle values construct a first combined MIMO virtual antenna array signal spectrum by combining minimum values of the signal spectrums at each angle value, and process the first combined MIMO virtual antenna array signal spectrum to detect an object.

In some aspects, the techniques described herein relate to a method, including determining a plurality of MIMO virtual antenna arrays, wherein each virtual antenna array of the plurality of MIMO virtual antenna arrays is associated with a subset of a plurality of transmit antennas and a subset of a plurality of receive antennas; determining, using signals received by the plurality of receive antennas, signal spectrums for each MIMO virtual antenna array of the plurality of MIMO virtual antenna arrays, wherein each signal spectrum includes signal magnitude values and has associated angle values, wherein main lobe positions of the signal spectrums of the plurality of MIMO virtual antenna arrays are at a same angle across all signal spectrums and sidelobe positions of the signal spectrums are not at the same angle across all signal spectrums; constructing a first combined MIMO virtual antenna array signal spectrum by combining minimum values of the signal spectrums at each angle value; and processing the first combined MIMO virtual antenna array signal spectrum to detect an object.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

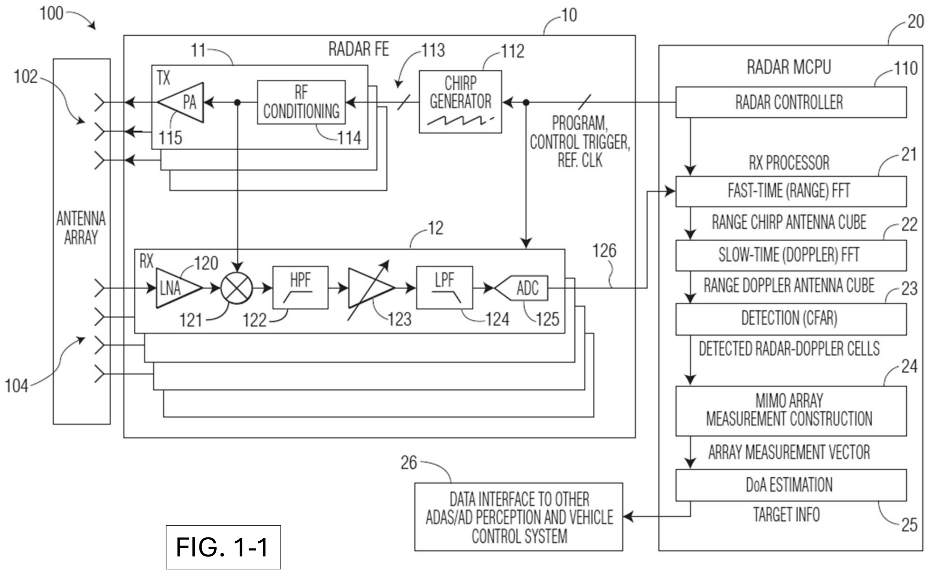

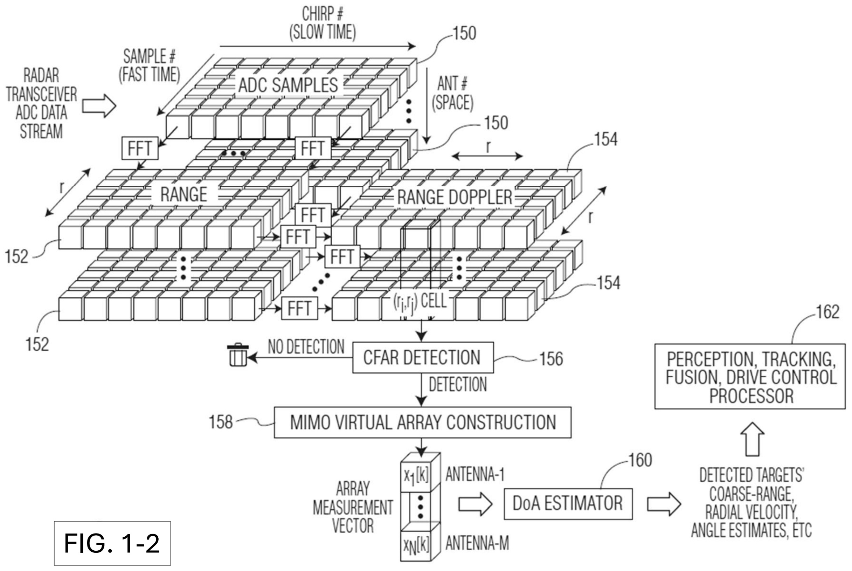

FIG. 1-1 depicts an example radar system that may implement the radar signal processing process of the present disclosure.
FIG. 1-2 graphically depicts, at a high-level, the processing steps that may be implemented by a vehicle radar system processor to process received digital signals.
FIG. 2-1 is a chart depicting TX antenna element spacing.
FIG. 2-2 is chart depicting RX antenna element spacing.

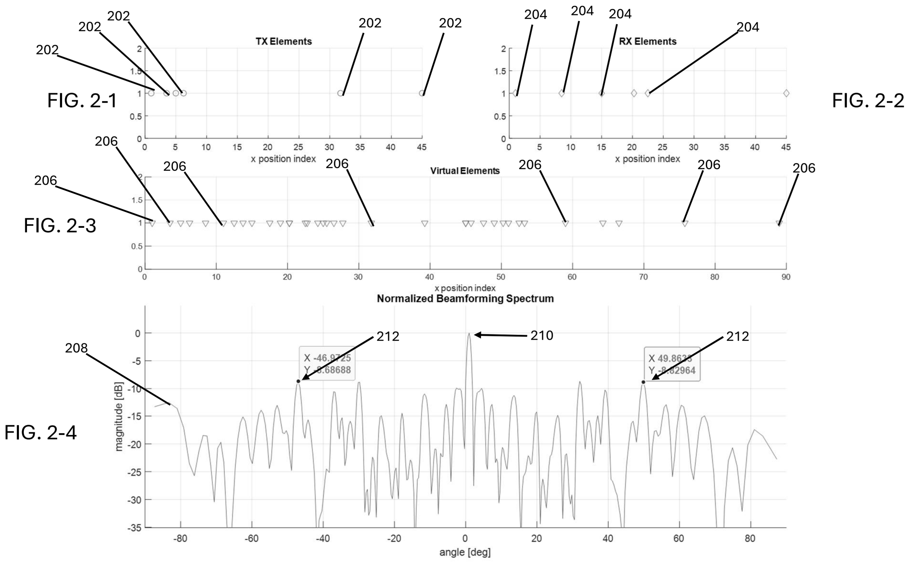

FIG. 2-3 is chart depicting MIMO virtual antenna array spacing.
FIG. 2-4 is a chart depicting an example beamforming spectrum measured by a MIMO virtual antenna array having the spacing depicted in FIG. 2-3.

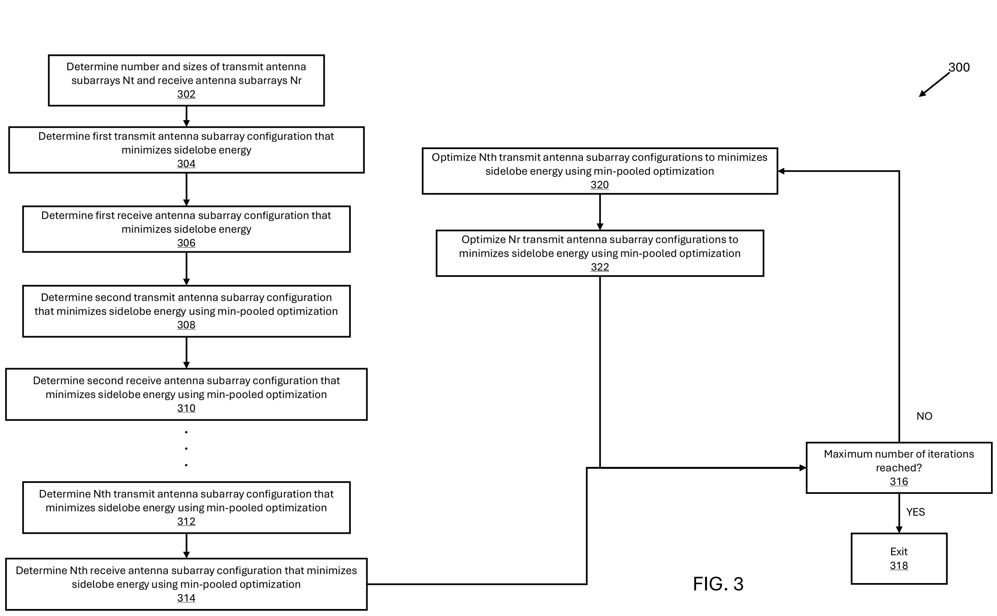

FIG. 3 is a flowchart depicting a method for constructing a hereditary apodization sparse array (HASA) virtual antenna array in accordance with the present disclosure.

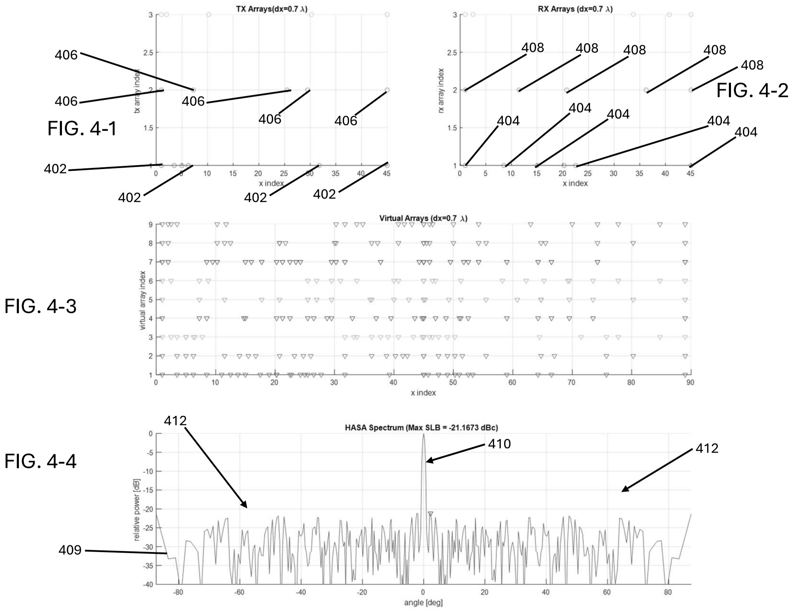

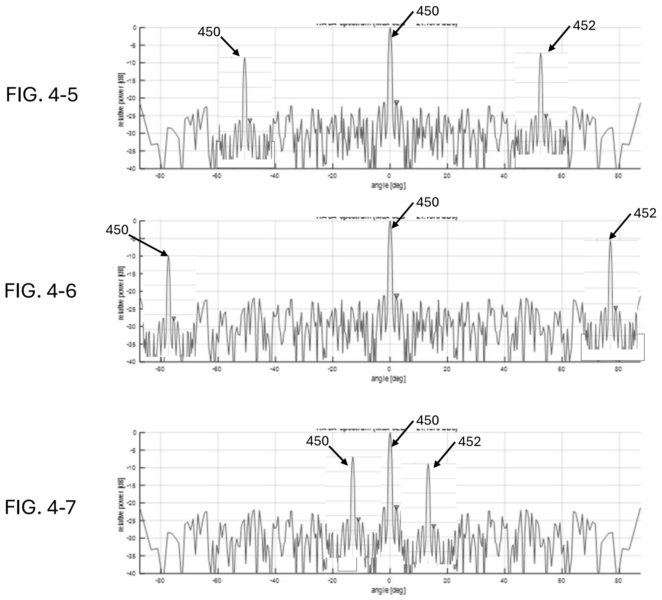

FIG. 4-1 is a chart depicting TX antenna element spacing.
FIG. 4-2 is chart depicting RX antenna element spacing.
FIG. 4-3 is chart depicting a HASA virtual antenna array spacing.
FIG. 4-4 is a chart depicting an example beamforming spectrum measured by a MIMO virtual antenna array having the spacing depicted in FIG. 4-3.
FIGS. 4-5 - 4-7 depict examples spectrums of individual virtual antenna arrays of a HASA virtual antenna array.

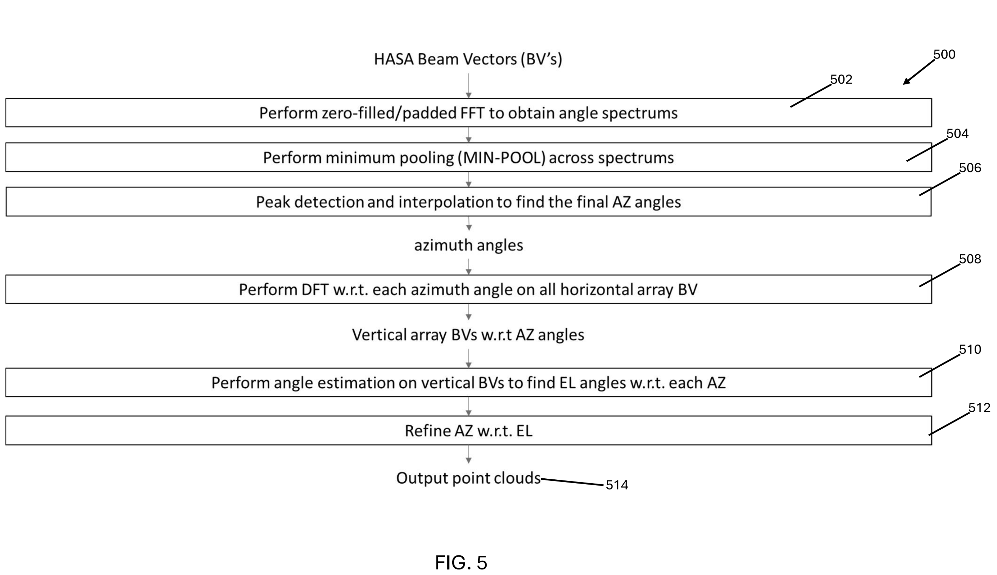

FIG. 5 is a flowchart depicting a method for using a HASA virtual antenna array to process received radar signals to determine the angle and elevation of objects in the vicinity of the radar system.

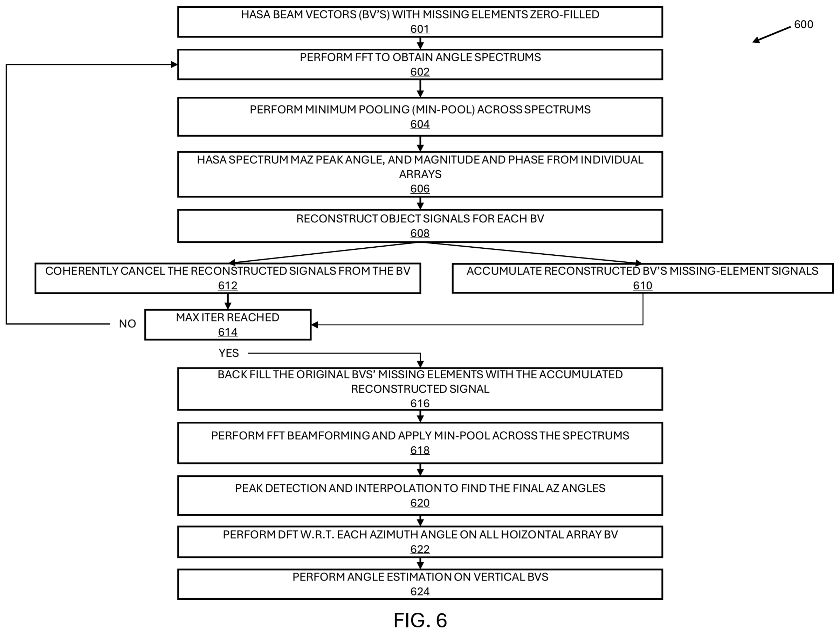

FIG. 6 is a flowchart depicting a method for processing radar signals with reduced sidelobe signal magnitudes.

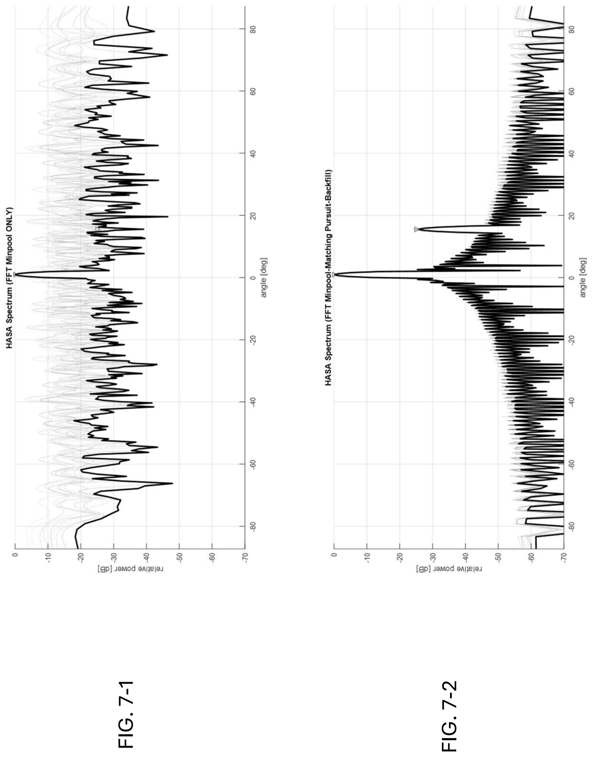

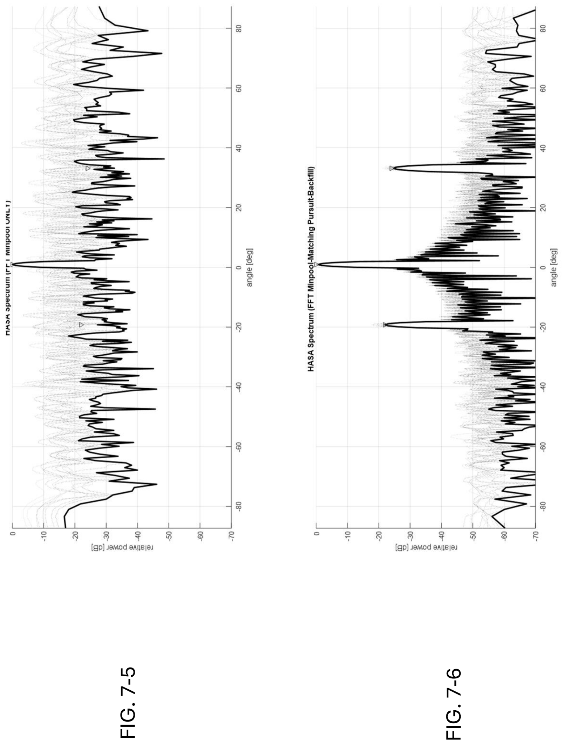

FIGS. 7-1 - 7-6 are charts depicting experimental results for the present HASA array signal processing approach.

### DETAILED DESCRIPTION OF THE ILLUSTRATED EMBODIMENTS

The present disclosure generally relates to signal processing in vehicle radar systems and, more specifically, to improved approaches for multiple-input multiple-output (MIMO) virtual array signal processing.

To improve the resolution of an automotive radar system, many such radar systems use multiple-input multiple-output (MIMO) virtual array processing, in which the signals transmitted by different transmitter antennas are combined in various ways with the signals received by different receiver antennas arrays to generate a large data set of received signals for the various virtual antenna combinations. This processing approach generates a large dataset of received signals that can be processed to detect objects in the vicinity of the radar system with higher resolution than other radar signal processing techniques.

It is known, however, that this virtual array processing approach, while increasing the apparent resolution of the vehicle radar system with an enlarged aperture and array thinning factor (without also increasing the number of physical antennas), can, in turn, decrease the system's object dynamic range (DR) performance. Consequently, the magnitude of signal peaks associated with potential objects relative to the baseline noise and sidelobe levels decreases with the increasing aperture and thinning factor, potentially resulting in missed peaks and missed objects. Consequently, objects with weaker reflection signals (e.g., smaller objects, or objects that absorb some radar signal energy or have lower radar cross-sections) cannot easily be detected unambiguously during such signal processing.

The present disclosure, therefore, provides an automotive radar system configured to implement a MIMO virtual array signal processing approach that can increase the DR performance of the radar system, with manageable computer resource requirements suitable for use in an automotive radar system.

To illustrate, FIG. 1-1 depicts a simplified schematic block diagram of an automotive radar system 100 that includes a radar unit 10 connected to a radar controller processor 20. Radar system 100 may be implemented in integrated circuit form with the radar unit 10 and the radar controller processor 20 formed with separate integrated circuits (chips) or with a single chip, depending on the application.

Within radar system 100 each radar unit 10 includes one or more transmitting antenna elements 102 and receiving antenna elements 104 connected, respectively, to one or more radio frequency (RF) transmitter (TX) units 11 and receiver (RX) units 12. For example, each radar unit 10 is shown as including individual antenna elements 102, 104 (e.g., TX1,i, RX1,j) connected, respectively, to three transmitter modules 11 and four receiver modules 12, but these numbers are not limiting and other numbers are also possible, such as four transmitter modules 11 and six receiver modules 12, or a single transmitter module 11 and/or a single receiver module 12.

Each radar unit 10 also includes a chirp generator 112 that is configured and connected to supply a chirp input signal to the transmitter modules 11. To this end, the chirp generator 112 is connected to receive a separate and independent local oscillator (LO) signal and a chirp start trigger signal. The operation of transmitter modules 11 may be controlled by a controller 110 that may be implemented, in whole or in part, by processor 20. Chirp signals 113 are generated and transmitted to transmitter modules 11, usually following a pre-defined transmission schedule, where the chirp signals 113 are filtered at the RF conditioning module 114 and amplified at the power amplifier 115 before being fed to the corresponding transmit antenna 102 (TX1,i) and radiated.

The radar signal transmitted by the transmitter antenna elements 102 (TX1,i, TX2,i) may be reflected by an object, and part of the reflected radar signal reaches the receiver antenna elements 104 (RX1,i) at radar unit 10. At each receiver module 12, the received radio frequency antenna signal is amplified by a low noise amplifier (LNA) 120 and then fed to a mixer 121 where the received signal is mixed with the transmitted chirp signal generated by the RF conditioning module 114. The resulting intermediate frequency signal is fed to a first high-pass filter (HPF) 122. The resulting filtered signal is fed to a first variable gain amplifier 123 which amplifies the signal before feeding it to a first low pass filter (LPF) 124. This re-filtered signal is fed to an analog/digital converter (ADC) 125 and is output by each receiver module 12 as a digital signal 126 (D1). The receiver module compresses object signals echoes of various delays into multiple sinusoidal tones whose frequencies correspond to the round-trip delay of the echo signal.

Radar system 100 includes radar controller processing unit 20 that is connected to supply input control signals to the radar system 10 (e.g., via controller 110) and to receive therefrom digital output signals (e.g., digital signal 126) generated by the receiver modules 12.

In one or more embodiment, the radar controller processing unit 20 may be embodied as a micro-controller unit (MCU) or other processing unit that is configured and arranged for signal processing tasks such as, but not limited to, object identification, computation of object distance, object velocity, and object direction, and generating control signals. The radar controller processing unit 20 may, for example, be configured to generate calibration signals, receive data signals, receive sensor signals, generate frequency spectrum shaping signals (such as ramp generation in the case of frequency modulated continuous wave (FMCW) radar) and/or register programming or state machine signals for RF (radio frequency) circuit enablement sequences. In addition, the radar controller processor 20 may be configured to program the transmitter modules 11 to operate following a MIMO scheme, such as in a time-division fashion by sequentially transmitting chirps for coordinated communication between the transmit antenna elements 102 TX1,i, RX1,j; code-division fashion by transmitting orthogonally phase-coded chirp sequences from transmit antenna elements; or by Doppler-division fashion by transmitting linear-progression phase-coded chirp sequences from transmit antenna elements with designed offsets in their Doppler spectrums.

Radar controller processor 20 is configured to process digital signal 126 to ultimately identify a distance to detected objects as well as an angular position and velocity of those objects with respect to radar system 100. These data points can be output in the form of a point cloud, which identifies, in a three-dimensional space, the distance to detected objects as well as a confidence level for each object detection. Typically, digital signal 126 includes a sequence of digital values representing magnitudes of radar signals received by receiving antenna elements 104 captured over time. Typically, each digital value is associated with a particular chirp number and sample number.

FIG. 1-1 shows the series of signal processing steps that are implemented by processor 20 in order to properly process digital signal 126 received from radar unit 10 to identify potential nearby objects. To complement FIG. 1-1, FIG. 1-2 graphically depicts, at a high-level, the processing steps that may be implemented by processor 20 to process digital signals 126.

In particular, the content of digital signals 126 is made up of a series of data frames that include a number of digital sample values (e.g., captured by ADCs 125 of receiver units 12) where the sample values are arranged in a two-dimensional matrix that is generated based upon a sequence of pulsed signals. The data structure making up a single captured frame is depicted by matrix 150 in FIG. 1-2. As depicted, a single frames-worth of data in matrix 150 includes a two-dimensional matrix with a first dimension that is referred to as the "fast time" dimension and represents data values that were captured from the different pulsed signals. The second dimension of matrix 150 is referred to as the "slow time" dimension and represents data values that were captured in response to the different chirp signals that may be included within a particular pulsed signal that was transmitted by transmitter modules 11. As shown in FIG. 1-2, signal processing may involve processing multiple frames of data represented by the several matrixes 150. In the present disclosure, that may involve processing individual frames of data, as described herein, to identify sets of peak values within the frames. Or, alternatively and as described herein, this may involve processing different subsections of the ADC data stream to identify sets of candidate peak values, which are ultimately combined across an entire radar cube to perform final peak detection. Typically, during such signal processing, frames of data represented by a matrix 150 are captured for each receive channel. As such, FIG. 1-2 depicts multiple matrixes 150 that are each associated with a different receive channel and may be received as input data to the signal processing chain.

For subsections of radar cube data that may comprise data represented by matrix 150, radar controller processor 20 initially performs a fast-time range Fast Fourier transform (FFT) 21 (FIG. 1-1) to generate new frame data represented by matrix 152. The FFT 21 is executed on the 1-D arrays of data (i.e., the signal) associated with each distinct chirp in the original input matrix 150 to generate a 1-D transformed signal of the same length. The FFTs of each chirp in the original input frame represented by matrix 150 are combined to generate the transformed frame as indicated by matrix 152. This process is repeated for each frame associated with each receive channel. The resulting data frames, which represent range maps, are represented in FIG. 1-2 as matrixes 152 and can be used to determine distance to particular objects as reflected in the range maps.

In a next step radar controller processor 20 performs an additional Fast Fourier Transform (FFT) 22 (FIG. 1-1) (referred to as the slow-time or Doppler-FFT) on the range maps to generate a new range-Doppler frame data represented by matrixes 154. In this step, however, FFT 22 is applied along the opposite dimension from the FFT 21. As such, the FFT 22 is executed on the 1-D arrays of data (i.e., the signal) in matrixes 152 associated with each range bin in the matrix 152 to generate a transformed 1-D signal of the same length. The FFTs of each signal in the frames of matrixes 152 are combined to generate the range-Doppler data frames as indicated by matrixes 154. This process is repeated for each frame associated with each receive channel. The range-Doppler data frames associated with matrixes 154 provide information about the movement of a potential object over time from one sample number to the next. With the data frames associated with matrixes 154 generated, it is possible to process the data encoded therein to begin identifying potential objects and, in the case of a detected object, determine its velocity and direction of arrival.

Accordingly, the radar controller processor 20 performs constant false alarm rate (CFAR) object detection 23 (FIG. 1-1), 156 (FIG. 1-2).

If a potential object has been detected, radar controller processor 20 performs multiple-input multiple-output (MIMO) array measurement construction 24 (FIG. 1-1), 158 (FIG. 1-2) to determine the direction of arrival (DOA) for each object at step 25 (FIG. 1-1), 160 (FIG. 1-2). The final object information dataset, which may include an object identifier, DOA, and other related information (e.g., object velocity) is then passed by radar controller processor 20 to an ADAS or other system configured to utilize the object information to control one or more vehicle system.

High-resolution imaging automotive radar systems can be important to the safe and efficient operation of autonomous driving (AD) and higher-level advanced driver assistance systems (ADAS). In these systems, signal processing pipelines are configured to utilize sparse array designs, which can be effective for achieving the relatively high angular resolution, as compared with other signal processing approaches, without requiring an excessive amount of computing resources, which may be unavailable in an automotive system.

In these sparse signal approaches, however, due to the array thinning effect or the spatial under-sampling, some amount of objected-detection ambiguity is unavoidable and, as a result, higher signal sidelobes are likely to be present in the beamforming spectrum outputs.

To illustrate this, FIGS. 2-1 - 2-4 includes several charts depicting example TX element spacing (FIG. 2-1) and RX element spacing (FIG. 2-2) for a MIMO radar system. The resulting MIMO virtual antenna array spacing is depicted by FIG. 2-3 and the resulting beamforming spectrum is shown in FIG. 2-4.

In FIG. 2-1, the horizontal axis represents the real-world position of different TX antenna elements 202 in a TX antenna array (e.g., one or more transmitting antenna elements 102 of FIG. 1-1). Typically. the antennas are non-evenly spaced from one another by a multiple of a unit value, where the unit value may be equal, for example, to half of a wavelength of the signals received by the radar system or greater.

Similarly, in FIG. 2-2, the horizontal axis represents the real-world position of different RX antenna elements 204 in an RX antenna array (e.g., one or more receiving antenna elements 104 of FIG. 1-1). The spacing of RX antenna elements 204 may, in some implementations, be similar to that of the TX antenna elements 202.

Each of the different TX antenna elements 202 and different RX antenna elements 204 are configured to transmit and receive radar signals, respectively. The transmitted signals are encoded or separable from one another (e.g., by time, frequency, or code) such that a signal received by a particular RX antenna element 204 can be associated with the particular TX antenna element 202 associated with that signal.

Through MIMO processing (e.g., performed by MIMO array measurement construction 24 of FIG. 1-1), the various TX antenna elements 202 and different RX antenna elements 204 are paired together in different combinations to form a MIMO virtual array, which is represented by FIG. 2-3. Specifically, in FIG. 2-3, the horizontal axis represents the virtual position of different virtual antenna elements 206, which make up the entire MIMO virtual array.

The signals associated with the various TX antenna element 202 and RX antenna element 204 combinations of the virtual array are processed via MIMO processing into a combined beamforming spectrum for a set of angular positions that can then be processed to identify peaks in that spectrum, which may be associated with detected objects at particular angular positions. An example beamforming spectrum is illustrated in FIG. 2-4 by trace 208. As illustrated by example trace 208, this conventional processing approach results in a central peak 210, which could be associated with a detected object. However, the spectrum includes prominent sidelobes 212, which could, in various circumstances, interfere with the detection of true signal peaks in the spectrum and, therefore, accurate object detection.

To provide an improved MIMO virtual array beamform spectrum with reduced sidelobe interference, the present disclosure provides an improved approach for MIMO virtual antenna array construction and signal processing that is referred to herein as a hereditary apodization sparse array (HASA) signal processing approach. There are two components of the present HASA approach - virtual antenna array construction, which is completed by an antenna array design phase, and array processing, which is completed by the radar system at run time.

During the radar system virtual antenna array design phase, various combinations of TX and RX antenna arrays (e.g., one or more transmitting antenna elements 102 of FIG. 1-1 and antenna elements 104 of FIG. 1-1) are used to form multiple linear sparse virtual arrays in several configurations that are selected so that the array gain patterns of the various combinations result in dispersed sidelobes angular positions such that sidelobes in signals captured by different array combinations do not occur at the same angular position across the different antenna combinations. As such, when the signals are combined, the sidelobes do not constructive interfere with one another, thereby effectively suppressing those sidelobes by detecting the inconsistency across the different signals, while maintaining the detected main-lobs or object peaks. This dispersal of sidelobe positions can be exploited through minimum pooling (i.e., by constructing a new angular signal or spectrum that includes the lowest value out of all available spectrums) to effectively remove or negate sidelobe energy in the processed output spectrum. Note that without losing the generality, in the disclosure the minimum pooling operation in a general sense includes operations like ordered statistics and parameterized smooth minimum functions.

Once the optimized virtual antenna array (also referred to as the HASA virtual antenna array) construction is complete, sparse array signal measurements (also referred to as beam vectors (BV)) of the sparse HASA virtual antenna arrays are captured. In a first approach, the sparse arrays are zero-filled and processed via fast Fourier transform (FFT) to obtain beamforming spectrums for each HASA virtual array combination. Minimum pooling (or min-pooling) operations are then applied across each of the beamforming spectrums to generated a new spectrum in which sidelobe magnitudes are diminished. Due to the complementary design of the HASA virtual antenna array (described below), the minimum pooling operation, as described below, suppresses sidelobes in the resulting processed signal, while leaving true object peaks largely intact, effectively increasing the dynamic range of the processed spectrum. To the extent sidelobe energy is present in the processed spectrum data, any such sidelobe energy is reduced due to the min-pooling operation compared to the sidelobes present in any of the individual linear sparse arrays. Note that the min-pooling operation is generally configured to suppress the sidelobes not corresponding to any true targets. So, as an optional processing step instead of determining the strongest target using the maximum peak of the min-pooling spectrum, the strongest target is determined by the maximum peak of the maximum pooling (max-pooling) spectrum. This optional process is used for avoiding the potential destructive interference amongst targets of the same azimuth angles but at different elevation angles. Other than the max peak, the rest of the spectrum is determined using min pooling.

In a further optional processing step, the sidelobes in the individual linear sparse arrays spectrums are further suppressed by successively cancelling the highest magnitude signal peak in each linear sparse array to recover the next-highest magnitude peak in a recursive manner. In each iteration of the approach, the highest magnitude peak is identified from the interpolated max peak out of the minimum pooled spectrums (or optionally the max peak of the maximum pooled spectrum). The recovered peaks and their coherently reconstructed signals can then be used to back-fill the missing elements in the sparse array. As a result, complete array measurements can be obtained as well as their beamforming spectrums. The resulting beamforming spectrums are further min-pooled to obtain a final output.

Using that output, normal radar signals processing can resume. Specifically, vertical arrays can be constructed by extracting array values from the multiple processed individual sparse arrays that occur at each angular position in which peaks have been identified across the various spectrums, as described below. Each peak is associated with a potential detected object and elevation angles then be estimated for each object from each vertical array. Any suitable angle estimation approach may be used to determine the elevation angles. Once processing is complete, a final output of the signal processing approach includes an object point cloud (e.g. in range-Doppler-azimuth-elevation-magnitude dimensions) which can be provided, in turn, to perception, drive control, and other automotive subsystems or ADAS (e.g., via data interface 26 of FIG. 1-1).

In constructing the present HASA virtual antenna array, complementary MIMO array geometries are selected that result in high dynamic range (HDR) performance. This can be accomplished by exploiting inconsistent angular sidelobe positions (e.g., where position is denoted by angular position) across multiple virtual array combinations relative to the position of the main lobe. In other words, across the various differently configured virtual arrays, true object peaks will occur across all spectrums at the same angular position, but sidelobes will not. Because the sidelobes will appear at different angular positions for each of the different virtual arrays, this inconsistency of sidelobe positions can be exploited to enable the reduction of sidelobe levels in the final spectrum via minimum pooling operations.

Conventional sparse array design consists of using datasets comprising rows of virtual antenna arrays that have identical or highly similar geometries that result in identical or highly similar angle spectrum measurements. Although the geometry is generally optimized to suppress sidelobes while maintaining a minimum aperture to support desired resolution (as defined by the -3dB to -3dB main lobe beamwidth), it is important to note that the geometry is the same or highly similar for each row in the resulting dataset and, consequently, for each virtual antenna array. As a result, sidelobe interference is generally present within the spectrum captured by the various virtual arrays at the same angular position, making it difficult to detect true peaks across the captured signals.

In contrast to that approach, in the present HASA approach for MIMO virtual antenna array signal processing, each individual virtual antenna array associated with a row of the sparse array dataset in the HASA virtual antenna array is constructed using different virtual antenna array geometries. These different array geometries are optimized such that their angular spectrums, after applying minimum pooling, result in an output spectrum in which sidelobe energy is minimized by distributing that sidelobe energy over a larger range of angles. The geometries of the virtual antennas can be optimized in a successive and iterative manner for efficient search.

To illustrate, FIG. 3 is a flowchart depicting method 300 for constructing a HASA virtual antenna array in accordance with the present disclosure. Method 300 may be implemented offline during a design phase of developing the radar system. A key objective of method 300 is to have combinations of virtual array angle spectrums that are complementary in nature, by which it means the sidelobe locations are not entirely consistent, and thus they allow for simple operations like min-pooling (i.e., selecting the lowest value of a set of spectrums at a particular angle), to filter out or otherwise negate the ambiguous sidelobes leveraging their inconsistent nature. On the other hand, because the main lobes are consistent in nature (i.e., located at the same angular position), the main lobes (i.e., true object signals) are not filtered out by the min-pooling operation.

In conjunction with method 300 of FIG 3, FIGS. 2-1, 2-2, 2-3, and 2-4 include charts depicting TX element spacing (FIG. 2-1), RX element spacing (FIG. 2-2), the resulting MIMO virtual antenna array spacing (FIG. 2-3), and a resulting beamforming spectrum (FIG. 2-4) after min-pooling for an example implementation. In the example presented in FIGS. 2-1 - 2-4, data for a 16T16R (16 transmitters and 16 receivers) vehicle radar system is presented that consists of 3 TX antenna subarrays of size 6, 5, and 5, and 3 RX antennas subarrays of size 6, 5, and 5. It should be understood that this method can be utilized in other radar systems having any number of TX and RX antennas. As depicted in FIG. 2-4 and described below, the resulting min-pooled beamforming spectrum may provide better than -20dB sidelobe signal magnitudes, compared to around -12dB mainlobe signal magnitudes in individual array's spectrums.

Referring back to FIG. 3, at block 302, a set of transmit and receive subarray sizes is initially determined for the given application. The set of subarray sizes determines, for N virtual antenna arrays a number of transmit antenna subarrays Nt and a number of receive antenna subarrays Nr, as well as their respective sizes, to be constructed. Once the transmit and receive antenna subarrays are constructed, they are combined, as described herein, to form the N virtual antenna arrays of the HASA virtual antenna array.

Typically, the sizes of each antenna subarray specify the number of transmit antennas and the number of receiver antennas to include in each virtual antenna array combination. In many cases, the number and the sizes of transmit and receive antenna subarrays are determined by the desired aperture size and thinning factors. Given a desired aperture size, a larger thinning factor can lead to lower cost at the expense of worse dynamic range performance and a larger number of subarrays whereas a smaller thinning factor leads to less cost saving but better dynamic range performance and fewer subarrays. The larger the number of subarrays, the more horizontal linear arrays can be constructed which can lead to more robust elevation performance.

With the subarray sizes determined at block 302, in an initial set of steps a set of antenna subarrays are determined to satisfy the requirements of the subarray sizes determined at block 302. Once the set of transmit and receive antenna subarrays are first determined, an iterative process is undertaken to further optimize the determined subarray configurations.

Accordingly, at block 304, a first transmit antenna subarray (e.g., different combinations of one or more transmitting antenna elements 102 of FIG. 1-1) is determined by determining a first configuration of transmit antenna elements in accordance with the subarray size restrictions for the first virtual transmit array determined at block 302 that results in a set of sidelobes in the subarray's array factor or far-field radiation pattern or directional gain pattern with minimum signal energy. For a particular antenna subarray, sidelobe magnitudes can be determined based upon the subarray's array factor pattern, which is a set of calculated values generated with the assumption that there is a signal at infinite distance impinging on the antenna subarray from different angles and each value is the sum of the received complex signal values at all receiving antennas in the array for each angle. The antenna array factor can be computed using zero-padded/filled FFT of a vector of 1's and 0's where 1's corresponds to antennas and 0's to missing positions assuming they are on a uniform grid. By performing this calculation, therefore, it is possible to determine a first configuration of the first transmit antenna subarray elements that results in a set of sidelobes with minimum signal energy. With reference to FIG. 4-1, for example, the chart shows an example first transmit antenna subarray at antenna array index 1 that includes a set of transmit antennas (indicated by points 402) that are each located at different x-index positions. That particular combination of transmit antenna elements, with their respective positions, represents the first transmit antenna subarray that is determined at block 304 of FIG. 3.

In a similar manner, at block 306, a first receive antenna subarray (e.g., different combinations of one or more receive antenna elements 104 of FIG. 1-1), is determined by determining a first configuration of receive antenna elements (in accordance with the subarray size restrictions determined at block 302) that results in a set of sidelobes in its array factor with minimum signal energy. With reference to FIG. 2-2, for example, the chart shows, at antenna array index 1, a set of virtual receive antennas (reflected by points 404) that are each located at different x-index positions. That particular combination of receive antenna elements, with their respective positions, represents the first receive antenna subarray that may be determined at block 306 of FIG. 3.

At the completion of block 306, first transmit and receive antenna subarrays have been determined, which can then be combined into a first virtual antenna array of the HASA virtual antenna array.

At block 308, a second transmit antenna subarray (e.g., different combinations of one or more transmitting antenna elements 102 of FIG. 1-1), is determined by determining a second configuration of transmitter antenna elements (in accordance with the subarray size restrictions determined at block 302) that results in a set of sidelobes in its array factor with minimum signal energy. Because, at the completion of block 306 the first full HASA virtual antenna array has been generated, the second transmit antenna subarray can be further optimized using a sampled min-pooled spectrum or array factor for the second transmit antenna subarray in combination with the first receive subarray. Accordingly, at this initial stage, this may involve combining the second transmit antenna subarray with the first receive antenna subarray, and the optimizing the second transmit antenna subarray by determining the configuration of the second transmit antenna subarray that results in minimum magnitude sidelobes in the min-pooled angle spectrum or array factor of the resulting virtual antenna array.

With reference to FIG. 2-1, for example, the chart shows, at antenna array index 2, a set of transmit antennas (reflected by points 406) that are each located at different x-index positions. The depicted combination of transmit antenna elements, with their respective positions, represents the second transmit antenna subarray that may be determined at block 308 of FIG. 3.

In a similar manner to block 308, at block 310, a second receive antenna subarray (e.g., different combinations of one or more receive antenna elements 104 of FIG. 1-1), is determined by determining a second configuration of receive antenna elements (in accordance with the subarray size restrictions determined at block 302) that results in a set of sidelobes in its array factor with minimum signal energy. Because, at the completion of block 308 two transmit antenna subarrays have been determined (i.e., at blocks 304 and 308), the second receive antenna subarray can be further optimized by determining a subarray configurations based upon computing min-pooled spectrums or array factor for the second receive antenna subarray. At this stage, this may involve combining the second receive antenna subarray iteratively with each of the first transmit antenna subarray (block 304) and second transmit antenna subarray (block 308), and then optimizing the second receive antenna subarray by determining the configuration of the second transmit antenna subarray that results in minimum magnitude sidelobes in the min-pooled angle spectrum or array factor of the resulting virtual antenna arrays.

With reference to FIG. 2-2, for example, the chart shows, at antenna array index 2, a set of receive antennas (reflected by points 408) that are each located at different x-index positions. The depicted combination of receive antenna elements, with their respective positions, represents the second receive antenna subarray that may be determined at block 310 of FIG. 3.

As reflected by blocks 312 and 314, this process of determining optimized (min-pooled) sets of transmit and receive antenna subarrays is iteratively continued until all N arrays are determined where N = Nt*Nr where Nt is the number of transmit subarrays and Nr is the number of receive subarray and N is the number of virtual receive antennas (or virtual antennas in short) as set forth in the subarray size restrictions determined at block 302.

Each new transmit antenna subarray is optimized by combining the transmit antenna subarray with each previously-determined receive antenna subarray and then optimizing the transmit antenna subarray by determining the configuration of the transmit antenna subarray that results in minimum magnitude sidelobes in the min-pooled angle spectrum or array factor of the resulting virtual antenna arrays. Similarly, each new receive antenna subarray is optimized by combining the receive antenna subarray with each previously-determined transmit antenna subarray and then optimizing the receive antenna subarray by determining the configuration of the receive antenna subarray that results in minimum magnitude sidelobes in the min-pooled angle spectrum or array factor of the resulting virtual antenna arrays.

At the conclusion of this process, a full set of transmit antenna subarrays and receive antenna subarrays have been determined pursuant to the number and sizes of subarrays determined at block 302. Although at this point the full set of transmit antenna subarrays and receive antenna subarrays has been at least partially optimized (enabling the full set N of virtual antenna arrays to be created), method 300 contemplates an iterative process in which the full set of transmit antenna subarrays and receive antenna subarrays are each sequentially optimized to further refine the overall configurations of transmit antenna subarrays and receive antenna subarrays and, thereby, the resulting HASA virtual antenna array.

Accordingly, at block 316 a determination is made as to whether method 300 has been run though a threshold number of iterations. If so, method 300 ends at block 318.

If not, method 300 moves to block 320 in which the transmit antenna subarray configurations are again optimized, this time in view of the full set of receive antenna subarrays that have been previously generated. Specifically, the various transmit antenna subarrays are optimized by combining each transmit antenna subarray with each previously-determined receive antenna subarray and then optimizing each transmit antenna subarray by determining the configuration of the transmit antenna subarray that results in minimum magnitude sidelobes in the min-pooled angle spectrum or array factor of the resulting virtual antenna arrays. This process can be performed sequentially for each transmit antenna subarray.

At block 322, the receive antenna subarray configurations are again optimized, this time in view of the full set of transmit antenna subarrays that have been previously generated. Specifically, the various receive antenna subarrays are optimized by combining each receive antenna subarray with each previously-determined transmit antenna subarray and then optimizing each receive antenna subarray by determining the configuration of the receive antenna subarray that results in minimum magnitude sidelobes in the min-pooled angle spectrum or array factor of the resulting virtual antenna arrays. This process can be performed sequentially for each receive antenna subarray.

It should be noted that during this iterative process, the various transmit and receive antenna subarrays are not required to be optimized in any particular sequence. The transmit antenna subarrays could be optimized in sequence before optimizing the receive antenna subarrays. Alternatively, the method could switch between optimizing transmit and receive antenna subarrays. In one or more embodiment, the iterative process of blocks 320 and 322 may in fact be further optimized by instead optimizing the individual transmit and receive antenna subarrays in a random or pseudo-random sequence.

This iterative process can in general be called a "greedy" algorithm that is in contrast to a global exhaustive search. Greedy algorithms provide an efficient way to search for a solution that is "good enough" but may not guarantee that the algorithm can reach a global ideal solution.

Once the threshold number of iterations is reached at block 316, the method exits by outputting an optimized HASA array that includes a set of virtual antenna arrays that represents each possible combination of optimized transmit and receive antenna subarrays. An example of such an array is depicted in FIG. 2-3 where each row in the chart represents a different MIMO virtual antenna array combination of an optimized transmit antenna subarray and an optimized receive antenna subarray. The horizontal spacing along the x-axis in each array of virtual antennas represents the horizontal position of the antennas in each virtual array. Because, in the specific example of FIGS. 4-1 - 4-4, the set of optimized transmit antenna subarrays include 3 subarrays and the set of optimized receive antenna arrays include 3 subarrays, the resulting combined HASA virtual antenna array, as shown in FIG. 4-3, includes 9 (i.e., 3 times 3) total virtual antenna arrays. As such, each virtual transmit subarray generated by method 300 has been combined with each virtual receive subarray generated by method 300 to create the HASA virtual antenna array.

The HASA virtual antenna array generated by method 300, because of the optimizations of each individual transmit and receive antenna subarray which were selected to reduce the magnitude of individual sidelobes, is consequently itself optimized to also reduce the magnitude of sidelobes in the signal spectrum captured by the virtual array.

To illustrate FIGS. 4-5 - 4-7 depict example spectrums that may be generated by individual virtual antenna arrays of a set of HASA virtual antenna arrays determined by method 300. In each spectrum, the horizontal axis represents angular position while the vertical axis represents signal magnitude. As illustrated, in each spectrum, the main lobes 450 (which represent the true detected object signals) are located at the same angular location. However, due to the optimization processes described above, the sidelobes 452 of each spectrum are located at different angular positions. Consequently, when these spectrums are combined together using a min-pool operation to generate an output spectrum that comprises the lowest magnitude value across all spectrums generated by the virtual antenna arrays at each angular position (e.g., the spectrum of FIG. 4-4), the sidelobe 452 peaks are effectively negated, but the main lobe 450 peak is preserved. This min-pooled combined spectrum represents that output of the HASA MIMO virtual antenna array and can be processed (e.g., by block 25 of FIG. 1-1) to perform angle of arrival estimation for the object associated with the main lobe 450 peak.

To illustrate the min-pooled output generated by the virtual antenna arrays depicted in FIG. 4-2, FIG. 4-4 is a chart depicting an example signal spectrum (trace 409) generated by the HASA virtual antenna array illustrated by FIG. 2-3 and generated according to method 300. As depicted by trace 409, this processing approach results in central peak 410 (also called a main lobe), representing the true signal and that is associated with a detected object. However, the sidelobes 412 have now been greatly diminished (e.g., as compared to those in FIG. 2-4), for example, in comparison to sidelobes 212 of FIG. 2-4. This results in a significant reduction in sidelobe interference and can increase the likelihood of true object detection by a radar system.

Therefore, when using the HASA virtual antenna array generated by method 300 to capture the spectrum depicted in FIG. 2-4, a min-pooling operation can be utilized (also referred to as an apodization process) to combine the signals capture by each virtual antenna array in the HASA virtual antenna array in a manner that reduces sidelobe magnitudes. Specifically, the operation takes as inputs the magnitude spectrums from all the receive antenna arrays in the HASA virtual antenna array and outputs at each angle the minimum magnitude across all captured spectrums. As a result, as long as at least one of those spectrum is without a high sidelobe at a particular angular position (which is likely given the optimization process that was utilized to generate the virtual antenna array according to method 300), the negative impacts (e.g., excess noise) of sidelobes that appear in only a subset of the spectrum at a particular angle are negated or otherwise greatly diminished in the min-pooled output. Consequently, the optimization process, which comprises the HASA virtual array construction of method 300 and the min-pooling operation, can be described as an iterative process of identifying complementary array geometries (i.e., transmit and receive antenna array configurations) that result in non-coinciding sidelobes at as many angular positions as possible and then min-pooling the captured spectrums at each angle to effectively remove sidelobe interference. By exploiting the virtual antenna array geometry diversity in this manner, the HASA virtual antenna array configuration generated by method 300 may be able to achieve lower sidelobes compared to any individual sparse array.

With the HASA virtual antenna array determined by method 300, FIG. 5 depicts method 500 for using the HASA virtual antenna array to process received radar signals to identify and determine the angle to objects in the vicinity of the radar system. Method 500 may be implemented, for example, by controller 110 of FIG. 1-1.

As an input to method 500, a HASA virtual antenna array (e.g., generated by method 300) is utilized to process radar signals received by the vehicle radar system (e.g., radar system 100 of FIG. 1-1) into a MIMO measurement array That measurement array, which may also be referred to as the set of spectrums or HASA beam vectors (BV) is processed at block 502 by executing a zero-filled/padded FFT on the HASA BVs to generate a set of angular spectrums. At block 504 min-pooling analysis is performed across those spectrums to generate an output spectrum with reduced sidelobe peaks by diminishing the magnitudes of sidelobe peaks that are only present at particular angular locations in a small number of the processed spectrums. As described above, the min-pooling approach involves, for each angular position in the set of HASA BVs, selecting the minimum value out of all the HASA BVs at that angular position to use as the signal magnitude for the processed spectrum at that angular position.

Due to the way the HASA virtual array was constructed (i.e., in accordance with method 300 and described above), the true signal peak (i.e., the peak that should be maintained) will be present across all spectrums and so the min-pooling operation will result in the true signal peak (i.e., the main lobe) being preserved in the final output array. However, because the peaks associated with sidelobe signals will be offset from one another in each individual spectrum (because the virtual antenna arrays that are associated with each HASA BV have differing geometry), the magnitudes of those sidelobe-related peaks will be minimized as a result of the min-pooling processing to essentially be removed from the processed spectrum. That is, if a sidelobe signal is present at a particular angular location within a subset of the HASA BVs, there is a high likelihood that in at least one of the other HASA BVs, that sidelobe peak will not be present at that angular location and the min-pooling process will ignore the peak and instead use the lower signal level (i.e., with no sidelobe peak) as the signal magnitude at that angular location in the output data. Consequently, the sidelobe signals are filtered out resulting in a significant reduction in sidelobe peak magnitudes.

With the spectrum processed and the sidelobe signals removed at block 504, normal signal processing can occur. As such, at block 506, peak detection is performed (e.g., via CFAR block 23 of FIG. 1-1) on the resulting spectrum to determine the angles associated with the remaining peaks and, thereby the likely DOA of objects detected by the radar system. At block 508 a discrete Fourier transform (DFT) is executed on vertical data arrays and at block 510 those processed vertical arrays are used to determine elevation angles of the detected objects. At block 512, the elevation and DOA are refined with respect to one another and the resulting angular information (as well as range data) is used to generate a point cloud dataset as output at block 514, which designates the distance, DOA, and elevation of detected objects. The point cloud can then be passed along to an ADAS, for example, enabling driver guidance and feedback to be provided based upon the location of detected objects in the geometrical space about the vehicle.

In a radar system, as the number of objects being detected increases, the need for reduced sidelobe signal magnitudes increases. As a rule of thumb, with each additional object to be detected, a 6dB reduction from the original absolute sidelobe level to obtain the worst-case DR is required (i.e., if the 1-object max sidelobe is -20dB, the worst-case 2-object DR should be estimated at 12-4B, and the worst-case 3-object DR at 8dB, assuming a 6dB detection margin; and on the contrary, if the 1-object max sidelobe is -12-2-2, the worst-case 2-object DR will be 6dB, and the 3- object DR will be 0dB, leading to insufficient DR).

Consequently, as more and more objects need to be detected with the same DR performance or when weaker and weaker objects (i.e., objects generating weaker radar signal reflections) need to be detected (i.e. with higher DR), reduction of maximum sidelobe signal magnitudes may be necessary. In this case, without increasing the number of virtual arrays and elements, additional processing steps may be utilized to increase the overall system's DR to improve the likelihood of the radar system detecting those additional objects.

To illustrate, FIG. 6 is a flowchart depicting method 600 for processing radar signals with reduced sidelobe signal magnitudes to improve the likelihood of detecting multiple objects.

As an input to method 600, the HASA virtual antenna array (e.g., generated according to method 300 of FIG. 3, above) is used to process received radar signals to generate a set of spectrums at block 601 (i.e., beam vectors (BVs)). Missing elements in those BVs are zero-filled and at block 602 an FFT is applied to the BVs to generate a set of angular spectrums. The missing elements results by the various virtual antenna arrays in the HASA virtual antenna array are sparse arrays in that they only include a subset of available antennas. These missing elements increase inaccuracies into the final radar system object detection and angle of arrival estimation processes. This method provides an approach for back-filling those missing elements to improve system accuracy.

At block 604, therefore, a min-pooling is performed on the spectrums or BVs determined at block 602, as described above, to generate a HASA spectrum with reduced sidelobe levels. After processing via the min-pooling operation, the main peak present in the processed HASA spectrum (which is likely associated with a first detected object) is processed at block 606 to determine the peak's location (i.e., angular position) using peak interpolation. With the peak location identified, the individual spectrums captured by each virtual antenna array in the HASA virtual antenna array (e.g., at block 602) are again processed to determine magnitude and phase parameters for each virtual array's spectrum at the peak location. With these parameters estimated, at block 608 the peak signals are separately coherently reconstructed for the virtual arrays of the HASA virtual antenna array, including the non-missing and the missing virtual-array elements, to reconstruct the object's signal for each virtual array. This reconstruction process can follow the inverse discrete Fourier transform that converts the spectrum's domain signal, which contains peaks defined by those interpolated peak frequency positions and their associated magnitude and phase values, into the spatial domain signal which are discrete samples indicating the filled array's signal, including the non-missing and missing antenna elements. With the reconstructed and filled (i.e., with no missing elements) array signals generated at block 608, the method undertakes two separate operations that may occur all or in-part in parallel.

In the first process, at block 610 the reconstructed object signals of the HASA virtual antenna array missing elements are coherently accumulated in a buffer (e.g., in a memory accessible to controller 110 of FIG. 1-1) for each virtual antenna array. As described below, this accumulated data can be used later to perform backfilling operations.

In the parallel second process, at block 612 the reconstructed object signals of the non-missing elements are coherently cancelled or subtracted from the BVs for each virtual array of the HASA virtual antenna array. Here the coherent cancellation can mean a complex-valued sinusoidal signal is to be suppressed by first estimating its frequency, magnitude, and phase parameters and secondly by generating another complex-valued sinusoidal signal of the estimated frequency magnitude and phase, and thirdly subtracting the original signal with the generated one. If the estimate is accurate, the original complex sinusoidal signal is said to be coherently cancelled or subtracted. These object-moved or object signal coherently-cancelled spectrums or BVs can then be used for the next iteration in the process and the signal processing of blocks 602, 604, 606, and 608 repeats to continually refine the reconstructed signal using the accumulated missing-element signals until the stop criteria are met as determined by block 614. In essence, this process (illustrated by blocks 602, 604, 606, 608, 612, and 614) represents an iterative process in which the object signals associated with clear object or main lobe peaks in the HASA spectrum are iteratively removed from the HASA spectrum allowing additional, lower magnitude peaks (i.e., representing other objects in the radar system's vicinity) to be detected and processed. As part of that processing, the reconstructed signals provide estimated values for the missing elements in the original HASA BVs (e.g., generated at block 601).

The stop criteria of block 614 typically includes (as an example) a maximum number of iterations threshold, a maximum DR threshold to stop the iteration once the desired DR is reached, and/or a minimum SNR threshold to stop the iteration once no significant object can be found relative to the noise and sidelobe floor.

When the stop criteria of block 614 is reached, at block 616 the accumulated reconstructed missing-element signals (i.e., stored while executing block 610) are used to back-fill the missing elements from the original spectrums or BVs (e.g., originally generated at block 601). Those back-filled spectrums can then be processed in accordance with the present disclosure (e.g., via min-pooling) to determine angles of arrival for detected objects. Accordingly, at block 618 the back-filled BVs are processed by FFT and min-pool operations on each spectrum, which are then combined at block 620 to perform peak detection and interpolation across all spectrums to determine an angle magnitude spectrum. That angle magnitude spectrum is then processed via a DFT to generate vertical array BVs for each angle at block 622. At block 624, angle estimation is performed on the vertical BV array to determine angle of arrival data. The angle of arrival data is used to construct an output point cloud that can be provided to a vehicle ADAS as described herein.

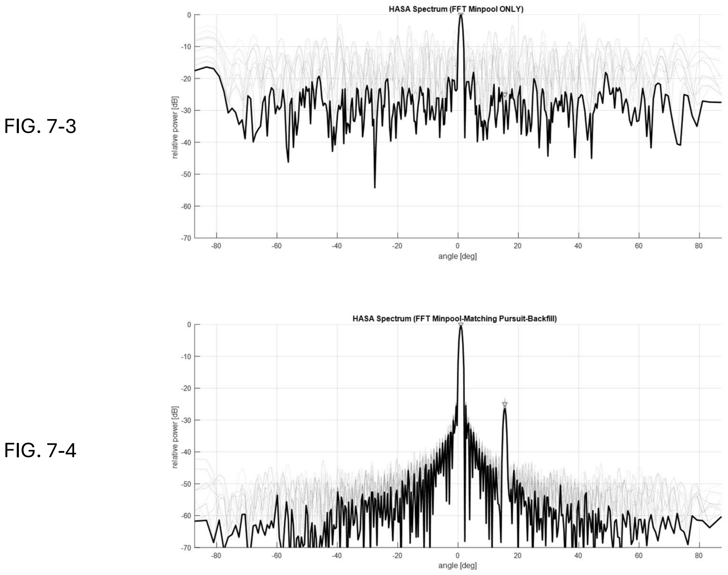

FIGS. 7-1 - 7-6 are a series of charts depicting experimental results for the present HASA array signal processing approach. In each of FIGS. 7-1 - 7-6, FIGS. 7-1, 7-3, and 7-5 depict the result (i.e. the azimuth angle spectrum) of the basic HASA BV processing (i.e., processing spectrums captured by a MIMO virtual array configured in accordance with method 300 of FIG. 3) and FIGS. 7-2, 7-4, and 7-6 depict the results of DR-enhanced HASA BV processing (e.g., the spectrums captured by a MIMO virtual array configured in accordance with method 300 and further processed according to the method of FIG. 6).

FIGS. 7-1 and 7-2 depict the results for a 2-object condition in which the strongest object's reflection signal power is 25dB higher that the second object's reflection signal power. In this example, the noise power is 10dB lower than the weaker object's signal power in BV. Calibration errors are presumed to be at a negligible level. FFT beamforming is based on the filled uniform virtual arrays with a -30dB Chebyshev window applied. The results depicted in FIGS. 7-1 and 7-2 show that basic HASA BV processing can fail to recover the weaker object (as illustrated by FIG. 7-1, the magnitude of the second object peak is only at the level of ambient noise) however, with DR-enhanced processing (e.g., in accordance with method 600 of FIG. 6) as shown in FIG. 7-2, both object signals can be recovered.

In one or more embodiment, the filled array follows a fractional unit spacing design in which the unit spacing of 0.7 lambdas (wavelengths) is further divided 4 times to form a quarter-spacing or 0.7/4 lambda uniform grid on which TX and RX antennas can be located (while maintaining a minimal spacing of 0.7 lambda with the nearest antenna). Consequently, the filled uniform arrays are with a spacing of 0.7/4 lambdas. This fractional spacing design can help reduced the sidelobe level and may be preferred over other approaches. The quarter spacing is used as an example and other fractional designs are possible (e.g. ½, 1/8 etc...).

Additionally, in the present approach, the constructed virtual arrays can have identical or similar apertures that result in identical or similar main lobe beamwidths. This can increase the likelihood of identical or similar object resolution performance across all arrays. This characteristic can minimize inconsistency or disagreement in the determined main lobe location and width across the various virtual arrays.

FIGS. 7-3 and 7-4 depict test results for a two-object scenario in which the object with the highest magnitude reflection signal is 25dB higher that the lower-magnitude object. The noise level is 10dB lower than the weakest object's signal power. Again, calibration errors are presumed to be at a typical level seen in a well calibrated system. In these results, a -30dB Chebyshev window is applied for the FFT beamforming process. The depicted results show that the basic HASA BV processing (FIG. 7-3) can fail to recover the weaker object signal (i.e., the second object's peak signal is hidden in the ambient noise level in the top chart) and the DR-enhance processing can recover the weaker object peak signal (i.e., in FIG. 7-4, the second object's peak signal is clearly observed above the ambient noise in the lower chart).

The results depicted in FIGS. 7-3 and 7-4, therefore, illustrate that basic HASA BV processing may fail to recover weaker objects that the DR-enhance processing may successfully recover.

FIGS. 7-5 and 7-6 depict test results for a three-object scenario in which the object with the highest magnitude reflection signal is about 22dB higher that the lower-magnitude objects. The noise level is 10dB lower than the weakest object's signal power. Again, calibration errors are presumed to be at a typical level seen in a well calibrated system. In these results, a -30dB Chebyshev window is applied for the FFT beamforming process. The depicted results show that the basic HASA BV processing (FIG. 7-5) can fail to recover the weaker objects' signals (i.e., the second and third object's peak signal is hidden in the ambient noise level in the top chart) and the DR-enhance processing can recover the weaker objects' peak signals (i.e., the second and third objects' peak signals are clearly observed above the ambient noise in FIG. 7-6).

The results depicted in FIGS. 7-5 and 7-6, therefore, illustrate that basic HASA BV processing may fail to recover weaker objects that the DR-enhance processing may successfully recover.

In some aspects, the techniques described herein relate to a system, including: a plurality of transmitter modules configured to transmit a plurality of transmitted radar signals using a plurality of transmit antennas; a plurality of receiver modules configured to receive reflections of the plurality of transmitted radar signals using a plurality of receive antennas; and a controller configured to: determine a plurality of MIMO virtual antenna arrays, wherein each virtual antenna array of the plurality of MIMO virtual antenna arrays is associated with a subset of the plurality of transmit antennas and a subset of the plurality of receive antennas, determine, using signals received by the plurality of receiver modules, signal spectrums for each MIMO virtual antenna array of the plurality of MIMO virtual antenna arrays, wherein each signal spectrum includes signal magnitude values and associated angles, wherein main lobes of each signal spectrum are at a same angle across all signal spectrums and sidelobe positions of the signal spectrums are not at the same angle across all signal spectrums, construct a first combined MIMO virtual antenna array signal spectrum by combining minimum values of the signal spectrums at each angle value, and process the first combined MIMO virtual antenna array signal spectrum to detect an object.

In some aspects, the techniques described herein relate to a system, wherein the controller is further configured to: determine reconstructed signals for the object for each MIMO virtual antenna array of the plurality of MIMO virtual antenna arrays; determine second signal spectrums for each MIMO virtual antenna array of the plurality of MIMO virtual antenna arrays by coherently canceling the reconstructed signals for the object from the signal spectrums of each MIMO virtual antenna array of the plurality of MIMO virtual antenna arrays; construct a second combined MIMO virtual array signal spectrum by combining minimum values of the second signal spectrums at each angle value; and determine a direction of arrival of the object using the second combined MIMO virtual array signal spectrum.

In some aspects, the techniques described herein relate to a system, wherein each MIMO virtual antenna array includes missing antenna elements and the controller is further configured to accumulate the reconstructed signals for the object to determine signal spectrum values for the missing antenna elements of each MIMO virtual antenna array.

In some aspects, the techniques described herein relate to a system, wherein the controller is further configured to generate backfilled signal spectrums for each MIMO virtual antenna array of the plurality of MIMO virtual antenna arrays using the signal spectrum values for the missing antenna elements.

In some aspects, the techniques described herein relate to a system, wherein the controller is configured to construct a third combined MIMO virtual array signal spectrum by combining minimum values of the backfilled signal spectrums at each angle value; and determine an angle of arrival of the object using the third combined MIMO virtual array signal spectrum.

In some aspects, the techniques described herein relate to a system, wherein first antenna elements of the plurality of transmit antennas are non-evenly spaced from one another by a unit value or multiples of the unit value and second antenna elements of the plurality of receive antennas are non-evenly spaced from one another by the unit value or multiples of the unit value.

In some aspects, the techniques described herein relate to a system, wherein the unit value is equal to or greater than half of a wavelength of the signals received by the plurality of receiver modules.

In some aspects, the techniques described herein relate to a system, including: a plurality of transmitter modules configured to transmit a plurality of transmitted radar signals using a plurality of transmit antennas; a plurality of receiver modules configured to receive reflections of the plurality of transmitted radar signals using a plurality of receive antennas; and a controller configured to: determine a plurality of MIMO virtual antenna arrays, wherein each virtual antenna array of the plurality of MIMO virtual antenna arrays is associated with a subset of the plurality of transmit antennas and a subset of the plurality of receive antennas, determine, using signals received by the plurality of receiver modules, signal spectrums for each MIMO virtual antenna array of the plurality of MIMO virtual antenna arrays, wherein each signal spectrum includes signal magnitude values and has associated angle values construct a first combined MIMO virtual antenna array signal spectrum by combining minimum values of the signal spectrums at each angle value, and process the first combined MIMO virtual antenna array signal spectrum to detect an object.

In some aspects, the techniques described herein relate to a system, wherein main lobe positions of the signal spectrums of the plurality of MIMO virtual antenna arrays are at a same angle across all signal spectrums and sidelobe positions of the signal spectrums are not at the same angle across all signal spectrums.

In some aspects, the techniques described herein relate to a system, wherein the controller is further configured to: determine reconstructed signals for the object for each MIMO virtual antenna array of the plurality of MIMO virtual antenna arrays; determine second signal spectrums for each MIMO virtual antenna array of the plurality of MIMO virtual antenna arrays by coherently canceling the reconstructed signal for the object from the signal spectrums of each MIMO virtual antenna array of the plurality of MIMO virtual antenna arrays; construct a second combined MIMO virtual array signal spectrum by combining minimum values of the second signal spectrums at each angle value; and determine a direction of arrival of a second object using the second combined MIMO virtual array signal spectrum.

In some aspects, the techniques described herein relate to a system, wherein antenna elements of the plurality of transmit antennas are non-evenly spaced from one another by a unit value or multiples of the unit value.

In some aspects, the techniques described herein relate to a system, wherein antenna elements of the plurality of receive antennas are non-evenly spaced from one another by the unit value or multiples of a unit value.

In some aspects, the techniques described herein relate to a system, wherein the unit value is equal to or greater than half of a wavelength of the signals received by the plurality of receiver modules.

In some aspects, the techniques described herein relate to a method, including determining a plurality of MIMO virtual antenna arrays, wherein each virtual antenna array of the plurality of MIMO virtual antenna arrays is associated with a subset of a plurality of transmit antennas and a subset of a plurality of receive antennas; determining, using signals received by the plurality of receive antennas, signal spectrums for each MIMO virtual antenna array of the plurality of MIMO virtual antenna arrays, wherein each signal spectrum includes signal magnitude values and has associated angle values, wherein main lobe positions of the signal spectrums of the plurality of MIMO virtual antenna arrays are at a same angle across all signal spectrums and sidelobe positions of the signal spectrums are not at the same angle across all signal spectrums; constructing a first combined MIMO virtual antenna array signal spectrum by combining minimum values of the signal spectrums at each angle value; and processing the first combined MIMO virtual antenna array signal spectrum to detect an object.

In some aspects, the techniques described herein relate to a method, further including: determining reconstructed signals for the object for each MIMO virtual antenna array of the plurality of MIMO virtual antenna arrays; determining second signal spectrums for each MIMO virtual antenna array of the plurality of MIMO virtual antenna arrays by coherently canceling the reconstructed signal of the object from the signal spectrums of each MIMO virtual antenna array of the plurality of MIMO virtual antenna arrays; constructing a second combined MIMO virtual array signal spectrum by combining minimum values of the second signal spectrums at each angle value; and determining a direction of arrival of a second object using the second combined MIMO virtual array signal spectrum.

In some aspects, the techniques described herein relate to a method, wherein each MIMO virtual antenna array includes missing antenna elements and further including accumulating the reconstructed signals for the object to determine signal spectrum values for the missing antenna elements of each MIMO virtual antenna array.

In some aspects, the techniques described herein relate to a method, further including generating backfilled signal spectrums for each MIMO virtual antenna array of the plurality of MIMO virtual antenna arrays using the signal spectrum values for the missing antenna elements.

In some aspects, the techniques described herein relate to a method, further including: constructing a third combined MIMO virtual array signal spectrum by combining minimum values of the backfilled signal spectrums at each angle value; and determining an angle of arrival of the second object using the third combined MIMO virtual array signal spectrum.

In some aspects, the techniques described herein relate to a method, wherein antenna elements of the plurality of transmit antennas are non-evenly spaced from one another by a unit or multiples of a unit value and antenna elements of the plurality of receive antennas are non-evenly spaced from one another by a unit or multiples of a unit value.

In some aspects, the techniques described herein relate to a method, wherein the unit value is equal to or greater than half of a wavelength of the signals received by the plurality of receive antennas.

As will be appreciated by one skilled in the art, aspects of the present disclosure may be embodied as a system, process, method, and/or program product. Accordingly, various aspects of the present disclosure may take the form of an entirely hardware embodiment, an entirely software embodiment (including firmware, resident software, microcode, etc.), or embodiments combining software and hardware aspects, which may generally be referred to herein as a "circuit," "circuitry," "module," or "system." Furthermore, aspects of the present disclosure may take the form of a program product embodied in one or more computer readable storage medium(s) having computer readable program code embodied thereon. (However, any combination of one or more computer readable medium(s) may be utilized. The computer readable medium may be a computer readable signal medium or a computer readable storage medium.)

A computer readable storage medium may be, for example, but not limited to, an electronic, magnetic, optical, electromagnetic, infrared, biologic, atomic, or semiconductor system, apparatus, controller, or device, or any suitable combination of the foregoing, wherein the computer readable storage medium is not a transitory signal per se. More specific examples (a non-exhaustive list) of the computer readable storage medium may include the following: an electrical connection having one or more wires, a portable computer diskette, a hard disk, a random access memory ("RAM"), a read-only memory ("ROM"), an erasable programmable read-only memory ("EPROM" or flash memory), an optical fiber, a portable compact disc read-only memory ("CD-ROM"), an optical storage device, a magnetic storage device, or any suitable combination of the foregoing. In the context of this document, a computer readable storage medium may be any tangible medium that can contain or store a program for use by or in connection with an instruction execution system, apparatus, controller, or device. Program code embodied on a computer readable signal medium may be transmitted using any appropriate medium, including but not limited to wireless, wire line, optical fiber cable, RF, etc., or any suitable combination of the foregoing.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, controller, or device.

The block diagrams in the figures illustrate architecture, functionality, and operation of possible implementations of circuitry, systems, methods, processes, and program products according to various embodiments of the present disclosure. In this regard, certain blocks in the block diagrams may represent a module, segment, or portion of code, which includes one or more executable program instructions for implementing the specified logical function(s). It should also be noted that, in some implementations, the functions noted in the blocks may occur out of the order noted in the figures. For example, two blocks shown in succession may, in fact, be executed substantially concurrently, or the blocks may sometimes be executed in the reverse order, depending upon the functionality involved.

Modules implemented in software for execution by various types of processors may, for instance, include one or more physical or logical blocks of computer instructions, which may, for instance, be organized as an object, procedure, or function. Nevertheless, the executables of an identified module need not be physically located together, but may include disparate instructions stored in different locations which, when joined logically together, include the module, and achieve the stated purpose for the module. Indeed, a module of executable code may be a single instruction, or many instructions, and may even be distributed over several different code segments, among different programs, and across several memory devices. Similarly, operational data (e.g., knowledge bases of adapted weights and/or biases described herein) may be identified and illustrated herein within modules, and may be embodied in any suitable form and organized within any suitable type of data structure. The operational data may be collected as a single data set, or may be distributed over different locations including over different storage devices. The data may provide electronic signals on a system or network.

These program instructions may be provided to one or more processors and/or controller(s) of a general-purpose computer, special purpose computer, or other programmable data processing apparatus (e.g., controller) to produce a machine, such that the instructions, which execute via the processor(s) of the computer or other programmable data processing apparatus, create circuitry or means for implementing the functions/acts specified in the block diagram block or blocks.

It will also be noted that each block of the block diagrams, and combinations of blocks in the block diagrams, can be implemented by special purpose hardware-based systems (e.g., which may include one or more graphics processing units) that perform the specified functions or acts, or combinations of special purpose hardware and computer instructions. For example, a module may be implemented as a hardware circuit including custom VLSI circuits or gate arrays, off-the-shelf semiconductors such as logic chips, transistors, controllers, or other discrete components. A module may also be implemented in programmable hardware devices such as field programmable gate arrays, programmable array logic, programmable logic devices, application specific ICs, microcontrollers, systems on a chip, general purpose processors, microprocessors, or the like.

These program instructions may also be stored in a computer readable storage medium that can direct a computer system, other programmable data processing apparatus, controller, or other devices to function in a particular manner, such that the instructions stored in the computer readable medium produce an article of manufacture including instructions which implement the functions/acts specified in the block diagram block or blocks.

The program instructions may also be loaded onto a computer, other programmable data processing apparatus, controller, or other devices to cause a series of operational steps to be performed on the computer, other programmable apparatus or other devices to produce a computer implemented process such that the instructions which execute on the computer, other programmable apparatus, or other devices provide processes for implementing the functions/acts specified in the block diagram block or blocks.

The preceding detailed description is merely illustrative in nature and is not intended to limit the embodiments of the subject matter or the application and uses of such embodiments.

As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, or detailed description.

The connecting lines shown in the various figures contained herein are intended to represent exemplary functional relationships and/or physical couplings between the various elements. It should be noted that many alternative or additional functional relationships or physical connections may be present in an embodiment of the subject matter. In addition, certain terminology may also be used herein for the purpose of reference only, and thus are not intended to be limiting, and the terms "first", "second" and other such numerical terms referring to structures do not imply a sequence or order unless clearly indicated by the context.

As used herein, a "node" means any internal or external reference point, connection point, junction, signal line, conductive element, or the like, at which a given signal, logic level, voltage, data pattern, current, or quantity is present. Furthermore, two or more nodes may be realized by one physical element (and two or more signals can be multiplexed, modulated, or otherwise distinguished even though received or output at a common node).

The foregoing description refers to elements or nodes or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with, electrically or otherwise) another element, and not necessarily mechanically. Thus, although the schematic shown in the figures depict one exemplary arrangement of elements, additional intervening elements, devices, features, or components may be present in an embodiment of the depicted subject matter.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A system, comprising:
a plurality of transmitter modules configured to transmit a plurality of transmitted radar signals using a plurality of transmit antennas;
a plurality of receiver modules configured to receive reflections of the plurality of transmitted radar signals using a plurality of receive antennas; and
a controller configured to:
determine a plurality of MIMO virtual antenna arrays, wherein each virtual antenna array of the plurality of MIMO virtual antenna arrays is associated with a subset of the plurality of transmit antennas and a subset of the plurality of receive antennas,
determine, using signals received by the plurality of receiver modules, signal spectrums for each MIMO virtual antenna array of the plurality of MIMO virtual antenna arrays, wherein each signal spectrum includes signal magnitude values and associated angles, wherein main lobes of each signal spectrum are at a same angle across all signal spectrums and sidelobe positions of the signal spectrums are not at the same angle across all signal spectrums,
determine a first combined MIMO virtual antenna array signal spectrum by combining minimum values of the signal spectrums at each angle value, and
process the first combined MIMO virtual antenna array signal spectrum to detect an object.

2. The system of claim 1, wherein the controller is further configured to:
determine reconstructed signals for the object for each MIMO virtual antenna array of the plurality of MIMO virtual antenna arrays;
determine second signal spectrums for each MIMO virtual antenna array of the plurality of MIMO virtual antenna arrays by coherently canceling the reconstructed signals for the object from the signal spectrums of each MIMO virtual antenna array of the plurality of MIMO virtual antenna arrays;
determine a second combined MIMO virtual array signal spectrum by combining minimum values of the second signal spectrums at each angle value; and
determine a direction of arrival of the object using the second combined MIMO virtual array signal spectrum.

3. The system of claim 2, wherein each MIMO virtual antenna array includes missing antenna elements and the controller is further configured to accumulate the reconstructed signals for the object to determine signal spectrum values for the missing antenna elements of each MIMO virtual antenna array.

4. The system of claim 3, wherein the controller is further configured to generate backfilled signal spectrums for each MIMO virtual antenna array of the plurality of MIMO virtual antenna arrays using the signal spectrum values for the missing antenna elements.

5. The system of claim 4, wherein the controller is configured to
determine a third combined MIMO virtual array signal spectrum by combining minimum values of the backfilled signal spectrums at each angle value; and
determine an angle of arrival of the object using the third combined MIMO virtual array signal spectrum.

6. The system of any preceding claim, wherein first antenna elements of the plurality of transmit antennas are non-evenly spaced from one another by a unit value or multiples of the unit value and second antenna elements of the plurality of receive antennas are non-evenly spaced from one another by the unit value or multiples of the unit value.

7. The system of claim 6, wherein the unit value is equal to or greater than half of a wavelength of the signals received by the plurality of receiver modules.

8. A method, comprising
determining a plurality of MIMO virtual antenna arrays, wherein each virtual antenna array of the plurality of MIMO virtual antenna arrays is associated with a subset of a plurality of transmit antennas and a subset of a plurality of receive antennas;
determining, using signals received by the plurality of receive antennas, signal spectrums for each MIMO virtual antenna array of the plurality of MIMO virtual antenna arrays, wherein each signal spectrum includes signal magnitude values and has associated angle values, wherein main lobe positions of the signal spectrums of the plurality of MIMO virtual antenna arrays are at a same angle across all signal spectrums and sidelobe positions of the signal spectrums are not at the same angle across all signal spectrums;
determining a first combined MIMO virtual antenna array signal spectrum by combining minimum values of the signal spectrums at each angle value; and
processing the first combined MIMO virtual antenna array signal spectrum to detect an object.

9. The method of claim 8, further comprising:
determining reconstructed signals for the object for each MIMO virtual antenna array of the plurality of MIMO virtual antenna arrays;
determining second signal spectrums for each MIMO virtual antenna array of the plurality of MIMO virtual antenna arrays by coherently canceling the reconstructed signal of the object from the signal spectrums of each MIMO virtual antenna array of the plurality of MIMO virtual antenna arrays;
determining a second combined MIMO virtual array signal spectrum by combining minimum values of the second signal spectrums at each angle value; and
determining a direction of arrival of a second object using the second combined MIMO virtual array signal spectrum.

10. The method of claim 9, wherein each MIMO virtual antenna array includes missing antenna elements and further comprising accumulating the reconstructed signals for the object to determine signal spectrum values for the missing antenna elements of each MIMO virtual antenna array.

11. The method of claim 10, further comprising generating backfilled signal spectrums for each MIMO virtual antenna array of the plurality of MIMO virtual antenna arrays using the signal spectrum values for the missing antenna elements.

12. The method of claim 11, further comprising:
determining a third combined MIMO virtual array signal spectrum by combining minimum values of the backfilled signal spectrums at each angle value; and
determining an angle of arrival of the second object using the third combined MIMO virtual array signal spectrum.

13. The method of any of claim 8 to claim 12, wherein antenna elements of the plurality of transmit antennas are non-evenly spaced from one another by a unit or multiples of a unit value and antenna elements of the plurality of receive antennas are non-evenly spaced from one another by a unit or multiples of a unit value.

14. The method of claim 13, wherein the unit value is equal to or greater than half of a wavelength of the signals received by the plurality of receive antennas.
